# EUROPÄISCHE PATENTSCHRIFT

(11) **EP 2 107 342 B1**
(45) Veröffentlichungstag und Bekanntmachung des Hinweises auf die Patenterteilung: **26.11.2014**
(21) Anmeldenummer: 09152770.5
(22) Anmeldetag: 13.02.2009
(51) Int. Cl.: G01D 5/04

(54) **Halteeinrichtung mit Drehwinkel-Impulsgeber und Übersetzungsstufen**
Holding device with pulse generating rotary encoder and multiple transmission gearing
Dispositif de fixation avec générateur d'impulsions d'angle de rotation et des gammes de vitesse

(30) Priorität: 02.04.2008 DE 202008004480 U
(43) Veröffentlichungstag der Anmeldung: 07.10.2009
(73) Patentinhaber: Krones AG, 93073 Neutraubling (DE)
(72) Erfinder: Heigl, Stefan, 93073 Neutraubling (DE); Seger, Martin, 93073 Neutraubling (DE)
(74) Vertreter: Benninger, Johannes

(56) Entgegenhaltungen:
- DE-A1- 3 046 469
- DE-A1- 19 506 938
- DE-A1- 19 962 241
- DE-A1-102004 021 928
- DE-A1-102007 025 353
- US-A1- 2006 208 726

## Beschreibung

Die vorliegende Erfindung betrifft eine Halteeinrichtung für mindestens einen Drehimpulsgeber mit den Merkmalen des unabhängigen Anspruchs 1.

In der Mess- und Automatisierungstechnik werden überwiegend digitale Messwertgeber zur Positionswerterfassung eingesetzt. In vielen Maschinen und Anlagen, beispielsweise in Vorrichtungen zur Behandlung von Flaschen in der Getränkeindustrie wie in Abfüllvorrichtungen, Transportanlagen, Etikettiermaschinen, Streckblasmaschinen oder Mixern, stellen derartige Messwertgeber eine wichtige Verbindung zwischen der Mechanik und der elektrischen bzw. elektronischen Steuerungs- und Regelungstechnik dar. Eine sehr häufig eingesetzte Variante derartiger Messwertgeber sind Drehimpulsgeber, die an rotierenden Teilen wie beispielsweise an Wellen angeordnet sind. Die Wirkungsweise und der Einsatz eines solchen Drehimpulsgebers in einer Abfüllvorrichtung für Getränkeflaschen gehen beispielsweise aus der DE 10 2004 021 928 A1 hervor.

Eine Vorrichtung zur Ermittlung des Lenkwinkels eines Kraftfahrzeuges wird durch die DE 195 06 938 A1 offenbart. Hierbei greift ein drehender Körper kämmend in zwei Zahnräder ein. Der Drehwinkel der Zahnräder wird erfasst, woraus Rückschlüsse zum jeweiligen Lenkwinkel des Kraftfahrzeuges gezogen werden können.

Aus der US 2006/0208726 A1 ist eine Welle bekannt, die mit Zahnrädern in Eingriff steht und über die Zahnräder Magneten drehend bewegt. Den Magneten ist jeweils eine HallSonde zugeordnet, die das vom jeweiligen Magneten bei drehender Bewegung erzeugte Feld erfasst. Hieraus können Aussagen zu einer Drehposition der Welle getroffen werden.

Ein weiterer Positionssensor ist aus der DE 199 62 241 bekannt. Der Positionssensor der DE-Anmeldung dient zum Erfassen der Absolutposition eines Gegenstandes und weist einen Drehstellungssensor mit einem Zahnrad auf, das federelastisch gegen eine Verzahnung am beweglichen Gegenstand verspannt ist.

Zudem offenbart die DE 10 2007 025 353 A1 einen Getriebemotor mit einer Untersetzungsgetriebeeinheit, einer Motoreinheit und einer untersetzten Ausgangswelle. Zum Erfassen der Drehstellung der Ausgangswelle ist ein Absolutsensor vorgesehen.

Aus der DE 30 46 469 A1 ist weiter ein Meßgetriebe bekannt. Hierbei ist eine Welle in einem Gehäuse gelagert und steht mit einem Weggeber in Verbindung. Der Weggeber ist ebenso im Gehäuse angeordnet.

Eine typische Montagestelle für Drehimpulsgeber ist ein Wellenende einer Förder- und/oder Transportwelle, an der mittels einer Wellenkupplung eine Drehverbindung zwischen dem an einer Halterung befestigten Drehimpulsgeber und der rotierenden Welle hergestellt ist. Die Wellenkupplung kann ggf. als flexible Kupplung ausgebildet sein, so dass kleinere Fluchtungsfehler ausgeglichen werden können. Für eine Vielzahl von Steuerungs- und Regelungsaufgaben werden auch zahlreichen Drehimpulsgeber benötigt; unter Umständen wird eine größere Zahl an Drehimpulsgebern benötigt als Abgriffsstellen an Wellenenden zur Verfügung stehen.

Ein Ziel der vorliegenden Erfindung besteht darin, eine ausreichende Anzahl von Abgriffsstellen für Drehimpulsgeber zur Verfügung zu stellen.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Die Erfindung umfasst eine Halteeinrichtung mit einem, mit einer rotierenden Welle einer Vorrichtung zur Behandlung von Getränkebehältern gekoppelten Drehimpulsgeber. Diese Halteeinrichtung weist wenigstens eine, zwischen dem wenigstens einen Drehimpulsgeber und der Welle angeordnete Übersetzungsstufe auf, was den Vorteil einer größeren Freiheit hinsichtlich der Platzierung des Drehimpulsgebers bietet, was beispielsweise bei beengten Einbauverhältnissen im Bereich der Welle bzw. deren freien Enden sehr von Vorteil sein kann. Während normalerweise ein rotierender Wellenstumpf zur unmittelbaren Koppelung eines Drehimpulsgebers, ggf. über eine flexible Kupplung dienen kann, ermöglicht die erfindungsgemäße Halteeinrichtung mit der darin angeordneten Übersetzungsstufe eine flexible Montage des Drehimpulsgebers, der auf diese Weise nicht koaxial zur Wellenachse rotieren muss, sondern seitlich, insbesondere parallel versetzt zur Wellenachse angeordnet sein kann.

Die erfindungsgemäße Halteeinrichtung weist zwei oder mehr, jeweils über Übersetzungsstufen mit der Welle gekoppelte Drehimpulsgeber auf. Dies bietet den besonderen Vorteil, dass mehrere Drehimpulsgeber an einem einzigen Wellenanschluss angebracht werden können. So kann bei einer größeren Zahl von benötigten Drehimpulsgebern und einer zu geringen Anzahl von zur Verfügung stehenden Wellenanschlüssen jeder einzelne Drehimpulsgeber angeschlossen werden.

Die wenigstens eine Übersetzungsstufe kann insbesondere durch eine Zahnradübersetzungsstufe gebildet sein. Zwischen dem wenigstens einen Drehimpulsgeber und der Welle kann insbesondere eine 1:1-Übersetzung vorgesehen sein. Bei entsprechender Anpassung der den Drehimpulsgebern nachgeschalteten Auswerteschaltung können jedoch auch andere Übersetzungsstufen vorgesehen sein.

Die wenigstens eine Zahnradübersetzungsstufe weist vorzugsweise ein Zahnradpaar oder mehrere Zahnradpaare auf, da hierbei unter allen Betriebsumständen jederzeit eine feste Zuordnung der Umdrehungen zwischen den miteinander gekoppelten Wellen gegeben ist.

Die Zahnradübersetzung kann ein drehfest mit der Welle gekoppeltes Abtriebszahnrad vorsehen, das im Verzahnungseingriff mit dem jeweiligen Antriebszahnrad des wenigstens einen Drehimpulsgebers steht. Sind mehrere Drehimpulsgeber an einer einzigen Halteeinrichtung angeordnet, so steht jedes Antriebszahnrad der Drehimpulsgeber an unterschiedlichen Stellen mit dem Abtriebszahnrad der Welle im Eingriff.

Die verschiedenen Zahnräder können insbesondere als gerade oder schräg verzahnte Zahnräder mit Stirnverzahnung ausgebildet sein. Wahlweise sind jedoch auch Kegelverzahnungen möglich, wenn beispielsweise eine abgewinkelte Anordnung des Drehimpulsgebers bzw. der zwei oder mehr Drehimpulsgeber benötigt wird.

Weiterhin kann ein zwischen dem Abtriebszahnrad und der Welle angeordnetes flexibles Kupplungselement zum Ausgleich von Winkel- und/oder Fluchtungsdifferenzen zwischen der Zahnradübersetzungsstufe und der Welle dienen. Die Halteeinrichtung kann mit der wenigstens einen Zahnradübersetzungsstufe und dem wenigstens einen Drehimpulsgeber in einem einstückigen Halterahmen fixiert sein. Der Halterahmen kann Teil eines Gehäuses sein oder eine separate Gehäuseverkleidung o. dgl. aufweisen.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
Fig. 1 zeigt schematisch eine Vorrichtung zur Behandlung von Flaschen in der Getränkeindustrie mit einem Drehimpulsgeber.
Fig. 2 zeigt eine Antriebseinheit für eine Fördereinrichtung der Vorrichtung gemäß Fig. 1.
Fig. 3 zeigt eine Halteeinrichtung mit zwei daran befestigten Drehimpulsgebern.
Fig. 4 zeigt eine Getriebeübersetzung zum Antrieb der Drehimpulsgeber.

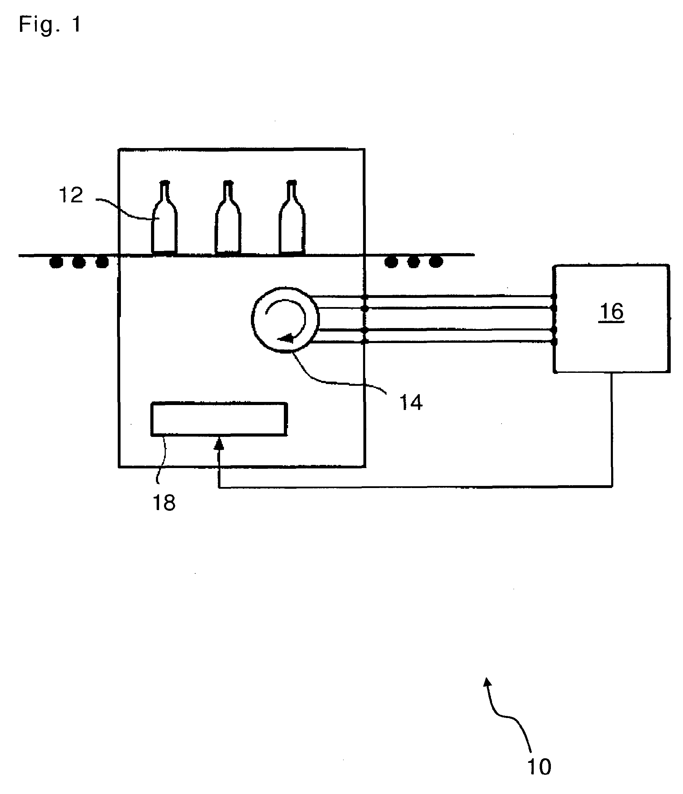

Die schematische Darstellung der Fig. 1 zeigt einen typischen Anwendungsfall für den Einsatz eines Drehimpulsgebers. Dargestellt ist eine Vorrichtung 10 zur Behandlung von Flaschen 12 in der Getränkeindustrie. Die Vorrichtung 10 kann dabei eine Abfüllvorrichtung, eine Transportvorrichtung, eine Etikettiermaschine, einen Packer, einen Pallettierer oder Transportbänder darstellen, wie sie bei der Getränkeabfüllung üblicherweise benutzt werden. Außerdem kann die Vorrichtung 10 auch eine Streckblasmaschine zur Herstellung von Flaschen oder jegliche andere Maschine repräsentieren, bei der die Positionserfassung der in der Vorrichtung 10 vorhandenen und/oder behandelten und/oder geförderten Produkte eine wichtige Rolle spielt.

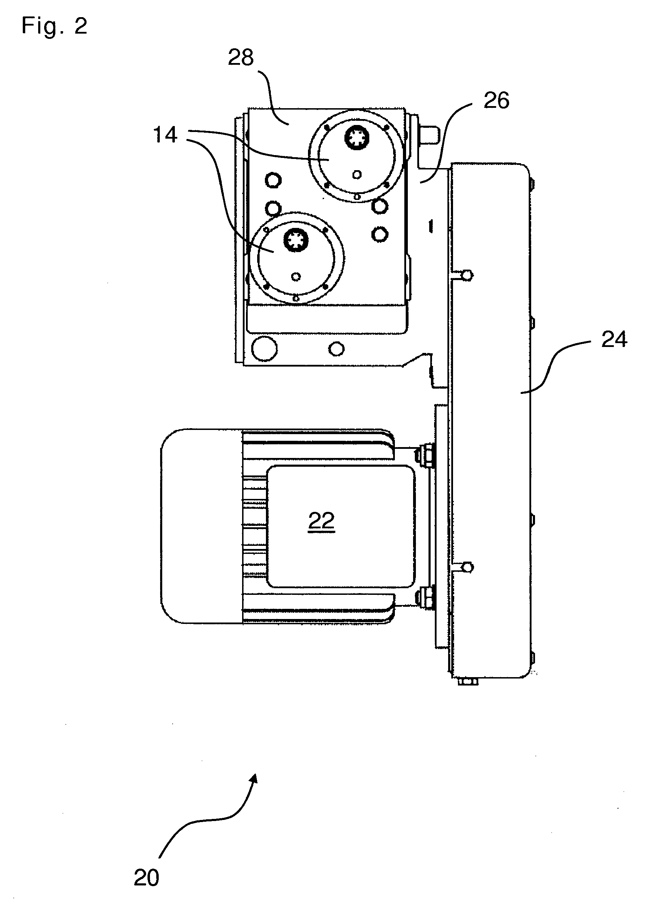

Zur Positionserkennung sieht die Vorrichtung 10 gemäß Fig. 1 einen Drehimpulsgeber 14 vor. Ferner umfasst die Vorrichtung eine Auswerte- und Steuereinheit 16, die den Transport der Flaschen 12 durch die Vorrichtung 10 mit Hilfe des Drehimpulsgebers 14 steuert. Hierzu dient ein der Vorrichtung 10 zugeordnetes Steuermodul 18, das Signale von der Auswerte- und Steuereinheit 16 erhält. Der Drehimpulsgeber 14 wird normalerweise an einem Wellenstumpf einer rotierenden Welle einer der Transport- und/oder Fördereinrichtungen, z.B. Förderband, der Vorrichtung 10 angeschlossen, wie dies anhand der Figuren 2 bis 4 näher erläutert ist.

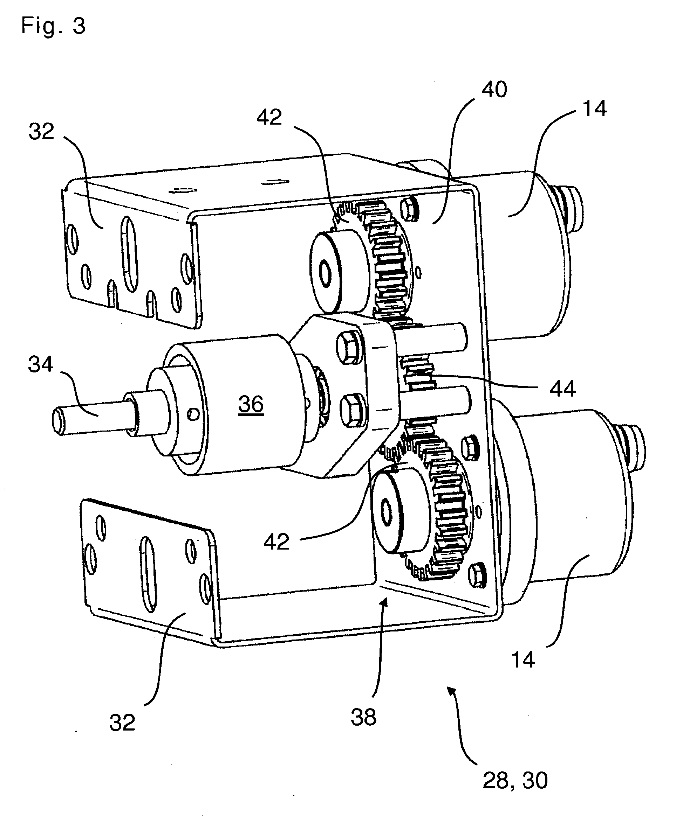

Die Fig. 2 zeigt eine Antriebseinheit 20 für eine Fördereinrichtung der Vorrichtung gemäß Fig. 1. Die Antriebseinheit umfasst einen elektrischen Antriebsmotor 22, der über eine Getriebeanordnung 24 mit einer Abtriebseinheit 26 gekoppelt ist, die eine rotierende Welle (vgl. Fig. 3) der Vorrichtung (vgl. Fig. 1) antreibt. Die Wellenachse der hier nicht sichtbaren Welle 26 verläuft senkrecht zur Zeichnungsebene der Fig. 2. Erkennbar ist weiterhin eine Halteeinrichtung 28, an der zwei Drehimpulsgeber 14 befestigt sind, die jeweils mit der Welle gekoppelt sind.

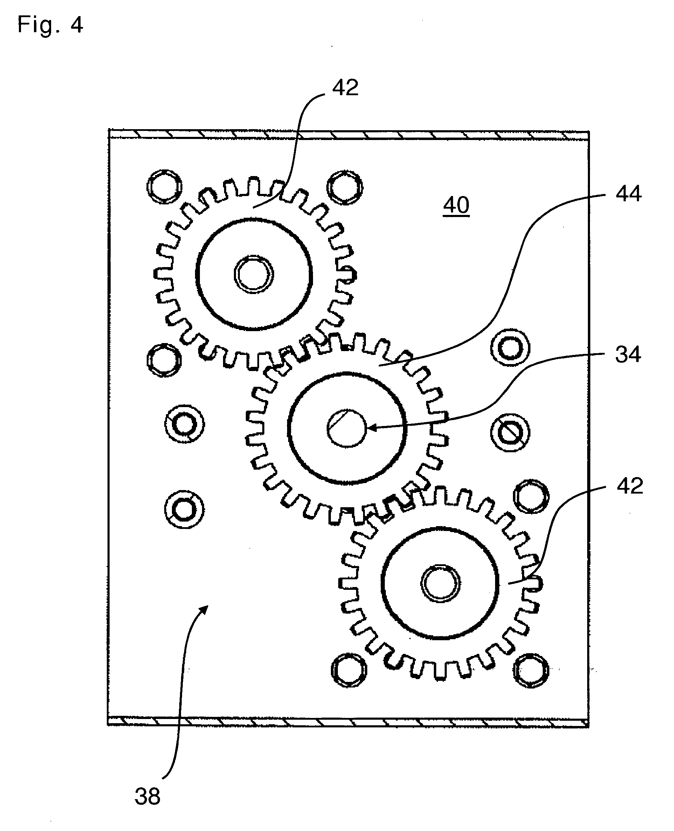

Die schematische Perspektivdarstellung der Fig. 3 zeigt die Halteeinrichtung 28 mit den beiden daran befestigten Drehimpulsgebern 14. Die Halteeinrichtung ist durch ein kastenförmiges Halteblech 30 gebildet, das mit zwei Blechabschnitten 32 an einer Seite mit der Antriebseinheit 26 (vgl. Fig. 2) verschraubt ist. Die Lücke zwischen den beiden Blechabschnitten 32 dient zur Durchführung der Welle 34, die über eine flexible Wellenkupplung 36 mit einem Übersetzungsgetriebe 38 verbunden ist (vlg. auch Fig. 4). Am Frontblech 40, das parallel zu den beiden Blechabschnitten 32 angeordnet ist, sind die beiden Drehimpulsgeber 14 verschraubt. Die Welle 34 kann beispielsweise die Antriebswelle eines Förderbandes sein.

Das Übersetzungsgetriebe 38 dient zum Antrieb der beiden am Frontblech 40 montierten Drehimpulsgeber 14 und umfasst insgesamt drei gerade verzahnte Zahnräder 42 und 44. Jeder der beiden Drehimpulsgeber 14 weist ein erstes Zahnrad 42 auf, das jeweils mit einem zweiten Zahnrad 44 im Verzahnungseingriff steht. Das zweite Zahnrad 44 ist über die Wellenkupplung 36, die zum Ausgleich von geringen Achsversatz- oder Winkelabweichungen dient, drehfest mit der Welle 34 verbunden und bildet einen Teil der Abtriebseinheit 26. Da die Zahnräder 42 und 44 jeweils gleiche Durchmesser aufweisen, ist eine 1:1-Übersetzung der beiden Drehimpulsgeber 14 mit gleicher Drehzahl wie der Wellendrehzahl gewährleistet.

Je nach gegebenen Platzverhältnissen können wahlweise auch mehr als zwei Drehimpulsgeber 14 mit der Welle 34 gekoppelt sein, bspw. auch drei oder vier. Auch kann die Halteeinrichtung 28 modular aufgebaut sein und zunächst nur einen Drehimpulsgeber 14 aufnehmen, der je nach Bedarf um einen weiteren oder um mehrere weitere Drehimpulsgeber ergänzt werden kann, sollte dies zu einem späteren Zeitpunkt sinnvoll oder notwendig sein.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

## Patentansprüche

1. Halteeinrichtung (28) mit zwei oder mehr mit einer rotierenden Welle (34) gekoppelten Drehwinkel-Impulsgebern (14) und Übersetzungsstufen (38), **dadurch gekennzeichnet, dass** die Drehwinkel-Impulsgeber (14) jeweils über Übersetzungsstufen (38) mit einer rotierenden Welle (34) einer Vorrichtung (10) zum Transportieren von Artikeln und/oder zur Behandlung von Getränkebehältern gekoppelt sind, wobei die Koppelung über einen Wellenstumpf einer rotierenden Welle (34) einer Transport- und/oder Fördereinrichtung bzw. eines Förderbandes der Vorrichtung (10) erfolgt.

2. Halteeinrichtung nach Anspruch 1, wobei die wenigstens eine Übersetzungsstufe (38) durch eine Zahnradübersetzungsstufe gebildet ist.

3. Halteeinrichtung nach Anspruch 1 oder 2, wobei eine 1:1-Übersetzung zwischen dem wenigstens einen Drehwinkel-Impulsgeber (14) und der Welle (34) ausgebildet ist.

4. Halteeinrichtung nach Anspruch 2 oder 3, wobei die wenigstens eine Zahnradübersetzungsstufe (38) ein Zahnradpaar (42, 44) aufweist.

5. Halteeinrichtung nach Anspruch 2 oder 3, wobei ein drehfest mit der Welle (34) gekoppeltes Abtriebszahnrad (44) im Verzahnungseingriff mit dem jeweiligen Antriebszahnrad (42) des wenigstens einen Drehwinkel-Impulsgeber (14) steht.

6. Halteeinrichtung nach Anspruch 5, wobei ein zwischen dem Abtriebszahnrad (42) und der Welle (34) angeordnetes flexibles Kupplungselement (36) zum Ausgleich von Winkel- und/oder Fluchtungsdifferenzen zwischen der Zahnradübersetzungsstufe (38) und der Welle (34) vorgesehen ist.

7. Halteeinrichtung nach einem der Ansprüche 1 bis 6, wobei die Halteeinrichtung (28) mit der wenigstens einen Zahnradübersetzungsstufe (38) und dem wenigstens einen Drehwinkel-Impulsgeber (14) in einem einstückigen Halterahmen (30) fixiert sind.

## Claims

1. A holding device (28) having two or more rotary angle pulse encoders (14), which are coupled to a rotating shaft (34), and transmissions (38), **characterised in that** the rotary angle pulse encoders (14) are, respectively, coupled via transmissions (38) to a rotating shaft (34) of an appliance (10) for transporting articles and/or for treating beverage containers, wherein the coupling is effected via a shaft stub of a rotating shaft (34) of a transport and/or conveyor device or of a conveyor belt of the appliance (10).

2. The holding device as recited in claim 1 wherein the at least one transmission (38) is formed by a gear wheel transmission.

3. The holding device as recited in claim 1 or 2 wherein the transmission between the at least one rotary angle pulse encoder (14) and the shaft (34) is designed to be a 1:1 transmission.

4. The holding device as recited in claim 2 or 3 wherein the at least one gear wheel transmission (38) has a gear wheel pair (42, 44).

5. The holding device as recited in claim 2 or 3 wherein an output gear wheel (44) that is torque-proofly coupled to the shaft (34) is in a toothed engagement with the respective input gear wheel (42) of the at least one rotary angle pulse encoder (14).

6. The holding device as recited in claim 5 wherein a flexible coupling element (36), which is arranged between the output gear wheel (42) and the shaft (34), is provided for equalising differences in angle and/or alignment between the gear wheel transmission (38) and the shaft (34).

7. The holding device as recited in one of the claims 1 to 6 wherein the holding device (28) is fastened together with the at least one gear wheel transmission (38) and the at least one rotary angle pulse encoder (14) in a one-piece support frame (30).

## Revendications

1. Dispositif de support (28) comprenant deux capteurs de moment angulaire (14) ou plus qui sont couplés à un arbre (34) rotatif ainsi que des étages de transmission (38), **caractérisé par le fait que** lesdits capteurs de moment angulaire (14) sont couplés chacun par des étages de transmission (38) à un arbre (34) rotatif d'un dispositif (10) de transport d'articles et/ou de traitement de récipients de boisson, le couplage se faisant par un bout d'arbre d'un arbre (34) rotatif d'un dispositif de transport et/ou de convoyage ou bien d'une bande transporteuse dudit dispositif (10).

2. Dispositif de support selon la revendication 1, dans lequel ledit au moins un étage de transmission (38) est formé par un étage de transmission à engrenage.

3. Dispositif de support selon la revendication 1 ou 2, dans lequel une transmission de 1 : 1 est réalisée entre ledit au moins un capteur de moment angulaire (14) et ledit arbre (34).

4. Dispositif de support selon la revendication 2 ou 3, dans lequel ledit au moins un étage de transmission à engrenage (38) présente un couple de roues dentées (42, 44).

5. Dispositif de support selon la revendication 2 ou 3, dans lequel une roue dentée entraînée (44) couplée d'une manière solidaire en rotation à l'arbre (34) se trouve en prise avec la roue dentée motrice (42) respective dudit au moins un capteur de moment angulaire (14).

6. Dispositif de support selon la revendication 5, dans lequel un élément de couplage (36) flexible disposé entre ladite roue dentée entraînée (42) et ledit arbre (34) est prévu pour compenser des différences d'angle et/ou d'alignement entre ledit étage de transmission à engrenage (38) et ledit arbre (34).

7. Dispositif de support selon l'une quelconque des revendications 1 à 6, dans lequel ledit dispositif de support (28) est fixé avec ledit au moins un étage de transmission à engrenage (38) et avec ledit au moins un capteur de moment angulaire (14) dans un cadre de maintien (30) fait d'une seule pièce.
